(19) Europäisches Patentamt
European Patent Office
Office européen des brevets

(11) **EP 3 670 740 B1**

(12) **EUROPEAN PATENT SPECIFICATION**

(45) Date of publication and mention
of the grant of the patent:
**02.02.2022   Bulletin 2022/05**

(51) International Patent Classification (IPC):
*D21H 17/11* (2006.01)      *B32B 29/00* (2006.01)
*B32B 29/06* (2006.01)      *B32B 33/00* (2006.01)
*D21H 17/67* (2006.01)      *D21H 19/66* (2006.01)
*D21H 19/82* (2006.01)

(21) Application number: **18214805.6**

(22) Date of filing: **20.12.2018**

(52) Cooperative Patent Classification (CPC):
**D21H 19/824; D21H 17/11; D21H 17/675;
D21H 19/66;** B32B 33/00

(54) **AMPHIPHOBIC CELLULOSIC MATERIALS, PRODUCTION THEREOF AND USES**

AMPHIPHOBE CELLULOSEHALTIGE MATERIALIEN, DEREN HERSTELLUNG UND VERWENDUNG

MATÉRIAUX CELLULOSIQUES AMPHIPHOBES, LEUR PRODUCTION ET LEURS UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020   Bulletin 2020/26**

(73) Proprietor: **European Central Bank
60314 Frankfurt am Main (DE)**

(72) Inventors:
• **RAIMONDO, Mariarosa
47521 Cesena (IT)**
• **BLOSI, Magda
48026 Russi (IT)**

• **VERONESI, Federico
48022 Lugo (IT)**
• **BOVERI, Giulio
15067 Novi Ligure (IT)**
• **MOSELE, Giuseppe
60316 Frankfurt am Main (DE)**

(74) Representative: **Prinz & Partner mbB
Patent- und Rechtsanwälte
Rundfunkplatz 2
80335 München (DE)**

(56) References cited:
**WO-A1-2014/059118      WO-A2-2013/014546
US-A1- 2017 121 596**

**Description**

FIELD OF INVENTION

The present invention relates to an amphiphobic cellulosic banknotes, a process for its production and the use of an amphiphobic coating for increasing dirt resistance and/or lifetime of a cellulosic banknote.

BACKGROUND

The functionalization of cellulosic banknotes is extremely appealing with the aim of modifying their properties, reactivity and, most notably, their interaction with substances in the environment.

Compositions for making cellulosic materials, such as paper, cardboards, textiles etc., exhibiting an oil and water rough surface repellent are known in the art. In case the water and oil repellency of banknotes need to be improved, it is necessary to maintain the look and feel of the materials to comply with the customers' expectations and/or relevant properties of the materials.

In particular banknotes are subjected to mechanical and environmental stress after input of the banknotes in the exchange circuits. For banknotes, the increased and preferably simultaneous repellence to water (hydrophobicity, superhydrophobicity) and oils/fats (oleophobicity, superoleophobicity) leads to the ability to decrease - or at least significantly limit - the adhesion of dirt (sebum, various stains) during their circulation, a phenomenon that diminishes their average lifetime. As of today, the need to withdraw dirty or damaged (by mechanical stresses) banknotes from circulation and to print and emit new ones leads to additional costs. At the moment, the average lifetime of a circulating banknote is estimated to be about 1.5 years.

EP 2 681 347 B1 and EP 2 864 522 B1 respectively disclose a method for the treatment of ceramic or metal surfaces for bestowing thereon a high hydrophobicity and oleophobicity. Ceramic and metal surfaces differ from cellulosic material surfaces in that they originally exhibit smooth surfaces and non-flexible materials, into which liquids penetrate generally less when compared to cellulosic materials.

Thus, there is still a need to provide amphiphobic cellulosic banknotes exhibiting a simultaneous repellence to water and oils / fats and maintaining the look and/or feel of the cellulosic material. Preferably, the amphiphobic cellulosic material should exhibit an increased resistance to mechanical stress and/or an increased resistance to chemical stress and/or an increased lifetime when compared to cellulosic material not comprising the amphiphobic property.

SUMMARY OF INVENTION

The problem of the present invention is solved by the subjects of the independent claims. Advantages (preferred embodiments) are set out in the detailed description hereinafter including the figures as well as in the dependent claims.

Accordingly, a first aspect of the present invention relates to a cellulosic banknote comprising a cellulosic banknote substrate having a surface, wherein the cellulosic banknote substrate comprises all security features within the substrate and applied on the surface of the substrate, and an amphiphobic coating, wherein the amphiphobic coating comprises an inorganic material selected from the group of ceramic oxides and an organic fluoro material selected from the group consisting of fluoroalkylsilane polymers (FAS), acrylic fluoropolymers, and perfluoropolyalkylether polymers, and is arranged on at least part of a surface of the cellulosic banknote substrate, characterized in that the inorganic material is configured as a layer having a nanostructured surface on at least part of the surface of the cellulosic banknote substrate, wherein the layer of the inorganic material has a mean thickness of less than 1 $\mu$m and the nanostructured surface of the layer of the inorganic material is at least partly coated with the organic fluoro material thereby forming a fluorinated inorganic material layer exhibiting a nanostructured surface as the amphiphobic coating having

    i. a static water contact angle > 110°, preferably ≥ 120°, more preferably ≥ 140° measured at room temperature with a sessile drop method using 1 $\mu$l per drop deionized water,

    ii. a static n-hexadecane contact angle ≥ 60°, preferably ≥ 80°, more preferably ≥ 100° measured at room temperature with a sessile drop method using 1 $\mu$l per drop n-hexadecane,

    iii. optionally a melted sebum contact angle ≥ 60°, preferably ≥ 80° measured at 50 °C with a sessile drop method using 1.8 to 2.8 $\mu$l per drop synthetic sebum, and

    iv. optionally a surface energy ≤ 20 mJ/m$^2$, preferable ≤ 15 mJ/m$^2$, more preferable ≤ 10 mJ/m$^2$ determined with the Owens, Wendt, Rabel and Kaelble (OWRK) method.

A second aspect of the present invention relates to a process for preparing an inventive cellulosic banknote, characterized in that the process comprises or consists of the following steps:

a. Providing a cellulosic banknote substrate having a surface, wherein the cellulosic banknote substrate comprises all security features within the substrate and applied on the surface of the substrate,

b. Providing an inorganic material selected from the group consisting of ceramic oxides,

c. Providing an organic fluoro material selected from the group consisting of fluoroalkylsilane polymers (FAS), acrylic fluoropolymers, and perfluoropolyalkylether polymers,

d. Coating at least part of the surface of the cellulosic banknote substrate with the inorganic material thereby forming an inorganic material layer having a mean thickness of less than 1 $\mu$m and exhibiting a nanostructured surface and

e. Coating at least part of the surface of the inorganic material layer with the organic fluoro material thereby forming a fluorinated inorganic material layer exhibiting a nanostructured surface as an amphiphobic coating having

i. a static water contact angle > 110°, preferably $\geq$ 120°, preferably $\geq$ 140° measured at room temperature with a sessile drop method using 1 $\mu$l per drop deionized water,

ii. a static n-hexadecane contact angle $\geq$ 60°, preferably $\geq$ 80°, more preferably $\geq$ 100° measured at room temperature with a sessile drop method using 1 $\mu$l per drop n-hexadecane,

iii. optionally a melted sebum contact angle $\geq$ 60°, preferably $\geq$ 80° measured at 50 °C with a sessile drop method using 1 $\mu$l per drop synthetic sebum, and

iv. optionally a surface energy $\leq$ 20 mJ/m$^2$, preferable $\leq$ 15 mJ/m$^2$, more preferable $\leq$ 10 mJ/m$^2$ determined with the Owens, Wendt, Rabel and Kaelble (OWRK) method.

A third aspect of the present invention relates to a use of a nanostructued amphiphobic coating comprising an inorganic material selected from the group consisting of ceramic oxides and an organic fluoro material selected from the group consisting of fluoroalkylsilane polymers (FAS), acrylic fluoropolymers, and perfluoropolyalkylether polymers exhibiting a

i. a static water contact angle > 110°, preferably $\geq$ 120°, preferably $\geq$ 140° measured at room temperature with a sessile drop method using 1 $\mu$l per drop deionized water,

ii. a static n-hexadecane contact angle $\geq$ 60°, preferably $\geq$ 80°, more preferably $\geq$ 100° measured at room temperature with a sessile drop method using 1 $\mu$l per drop n-hexadecane,

iii. optionally a melted sebum contact angle $\geq$ 60°, preferably $\geq$ 80° measured at 50 °C with a sessile drop method using 1.8 to 2.8 $\mu$l per drop synthetic sebum, and

iv. optionally a surface energy $\leq$ 20 mJ/m$^2$, preferable $\leq$ 15 mJ/m$^2$, more preferable $\leq$ 10 mJ/m$^2$ determined with the Owens, Wendt, Rabel and Kaelble (OWRK) method,

for increase of dirt resistance and/or lifetime of a cellulosic banknote, characterized in that the nanostructured amphiphobic coating is arranged on at least part of a surface of the cellulosic banknote substrate, wherein the cellulosic banknote substrate comprises all security features within the substrate and applied on the surface of the substrate, and wherein the inorganic material is configured as a layer having a mean thickness of less than 1 $\mu$m, which coated onto at least part of the surface (S1) of the cellulosic banknote substrate (10) thereby forming a nanostructured surface on at least part of the surface of the cellulosic banknote substrate, wherein the nanostructured surface of the inorganic material is coated with the organic fluoro material thereby forming a fluorinated inorganic material layer exhibiting a nanostructured surface (S3) as the amphiphobic coating.

The aspects of the present invention as set out hereinbefore can also comprise, if reasonable to a person skilled in the art, any possible combination of the preferred embodiments as set out in the dependent claims or disclosed in the following detailed description.

BRIEF DESCRIPTION OF DRAWINGS

Further aspects, characteristics and advantages of the invention will ensue from the following description of the embodiments with reference to the accompanying drawings, wherein

Fig. 1                 is a simplified cross-sectional view on a cellulosic banknote of an embodiment of the present invention.

FIG. 2                 is a simplified cross-sectional view on a cellulosic banknote of an alternative embodiment of the present invention.

FIG. 3A), 3B), 3C)    are simplified views of process steps of an embodiment of the present invention

DETAILED DESCRIPTION OF EMBODIMENTS

The present inventors have found out that the inventive cellulosic banknote exhibits amphiphobic properties, as it exhibits

i. a static water contact angle > 110°, preferably $\geq$ 120°, preferably $\geq$ 140° measured at room temperature with a sessile drop method using 1 $\mu$l per drop deionized water,

ii. a static n-hexadecane contact angle $\geq$ 60°, preferably $\geq$ 80°, more preferably $\geq$ 100° measured at room temperature with a sessile drop method using 1 $\mu$l per drop n-hexadecane,

iii. optionally a melted sebum contact angle $\geq$ 60°, preferably $\geq$ 80° measured at 50 °C with a sessile drop method using 1.8 to 2.8 $\mu$l per drop synthetic sebum, and

iv. optionally a surface energy $\leq$ 20 mJ/m$^2$, preferable $\leq$ 15 mJ/m$^2$, more preferable $\leq$ 10 mJ/m$^2$ determined with the Owens, Wendt, Rabel and Kaelble (OWRK) method.

In the context of the present invention, the melted sebum contact angle can be determined any suitable synthetic sebum. A suitable synthetic sebum is in particular the following composition or any equivalent thereof:
Synthetic sebum according to Bey comprising free fatty acids (preferably 18 wt.-%), beef tallow (preferably 32.8 wt.-%), fatty acid triglycerides (preferably 3.6 wt.-%), lanoline (preferably 18.3 wt.-%), cholesterol (preferably 3.8 wt.-%), hydrocarbon mixture (preferably 12 wt.-%) and cutina (preferably 11.6 wt.-%), wherein the wt.-% are based on the total weight of the synthetic sebum composition (wfk - Testgewebe GmbH, Bruggen-Bracht, Germany, order code 00612).
The surface energy determined in the context of the present invention with the Owens, Wendt, Rabel and Kaelble (OWRK) method can be measured with any suitable method, e.g. Fowkes method, van Oss-Chaudhury-Good method and Zisman method.
The simultaneous repellence to water and oils / fats is facilitated by use of the amphiphobic coating comprising an inorganic material selected from ceramic oxides and an organic fluoro material selected from the group consisting of fluoroalkylsilane polymers (FAS), acrylic fluoropolymers, and perfluoropolyalkylether polymers. The amphiphobic coating is arranged on at least part of a surface of the cellulosic banknote substrate and the inorganic material is configured as a layer having a nanostructured surface on at least part of the surface of the cellulosic banknote substrate and the organic fluoro material is configured as a layer on at least part of the inorganic material layer retaining at least in part the nanostructured surface provided by the inorganic material.
The present invention acts on the rough cellulosic banknote surface by modifying the banknote surface, in particular by morphologically structuring the cellulosic banknote surface with the inorganic material and further increasing the repellency by chemically modifying at least part of the inorganic surface with the organic fluoro material.
In other words, the amphiphobic coating according to the present invention improves the known repellency properties of an organic fluoro coating, which generally facilitates oil repellence, by morphologically structuring the organic fluoro material layer using an inorganic material layer and thereby increasing the water repellency.
Due to the amphiphobic properties of the inventive cellulosic banknote, an increased dirt resistance is also facilitated when compared to a cellulosic banknote not comprising the amphiphobic coating.
Alternatively or cumulatively, an increased lifetime of the inventive cellulosic banknote is facilitated when compared to a cellulosic banknote not comprising the amphiphobic coating. In particular with respect to inventive cellulosic banknotes, the increased dirt resistance and lifetime remarkably reduces the costs related to the withdrawal from the market due to soiling of banknotes. Furthermore, the printed graphics (numbers, images, etc.), relief carrying structures (intaglio printing, etc.) in particular allowing impaired people to read and other security features (holograms, watermark, etc.) are not impaired by the amphiphobic coating of the present invention.

Although EP 2 681 347 B1 and EP 2 864 522 B1 disclose methods for the treatment of smooth, non-flexible ceramic or metal surfaces for bestowing thereon a high hydrophobicity and oleophobicity, such treatments were not regarded to be suitable for cellulosic material surfaces. In particular the fact that the cellulosic material already exhibits a rough surface on a flexible substrate in contrast to the smooth surface of solid ceramics and metals was regarded to counteract the formation of the inorganic nanostructured surface layer. Moreover, on ceramics and metals the sol comprising the inorganic material remains on the surface and ,thus, allows the rearrangement of the inorganic material to form the nanostructured surface. In contrast thereto the liquid of the sol comprising the inorganic material penetrates into the cellulosic material and by absorption of the liquid into the cellulosic fibers and interstitials the surface of the cellulosic material changes. Furthermore, it was regarded that due to the absorption of the liquid the inorganic material would not have sufficient time to rearrange and form the nanostructued layer surface. In addition, the high curing temperatures in the range of 150 °C to 900 °C, which were regarded to be necessary for curing the inorganic gel film to obtain the nanostructured surface, would damage the cellulosic material as such. Accordingly, it is surprising that the inventive method provides the nanostructured amphiphobic layer by arranging the inorganic material in a layer exhibiting a nanostructured surface and chemically modifying at least part of the inorganic nanostructured layer with an organic fluoro material. Moreover, it is surprising that the nanostructured, amphiphobic layer according to the present invention remains stable on the flexible surface upon treatment simulating usage, like abrasion or crumpling test, and the superior amphiphobic properties remain.

In the context of the present invention, the term "banknote" refers to a so called finished banknote, which means that it comprises all security features within the substrate and applied on the surface of the substrate, such as, e.g., (partly) embedded features, security printing layer, optical feature, foil feature, magnetic feature, tactile feature, electronic feature, etc., as well as other printing layers, ect..

According to the present invention, the amphiphobic coating is arranged on at least part, preferably all of the surface of the cellulosic banknote substrate. In case security inks are to be used in case of robbery, the inks may also adhere to the surface of the inventively coated cellulosic banknote. As security inks may not spread out on the inventively coated surface, the security inks should be dispersed by, e.g. spraying, exploding etc. prior to adherence.

According to a further alternative or cumulative embodiment of the present invention, the inorganic material may be selected from the group consisting of $Al_2O_3$, $TiO_2$, $SiO_2$, $Y_2O_3$, ZnO and $ZrO_2$. The use of $Al_2O_3$, $TiO_2$, and $SiO_2$ as the ceramic oxides facilitates both the inertness of the inorganic material layer when in contact with the environment and the maintenance of the feel and look of the cellulosic banknote substrate. Furthermore, the ceramic oxides also retain the authentification of one or more security features in particular selected from the group consisting of optical features (holograms, watermarks, foil or micro lens patch or structures etc.), magnetic features, luminescent features, e.g. UV feature, infrared (IR) absorbing or emitting features, and electroluminescent features.

According to the present invention, the inorganic material is configured as a layer having a nanostructured surface on at least part of the surface of the cellulosic banknote substrate. The nanostructured surface of the layer of the inorganic material is at least partly coated with the organic fluoro material thereby forming a fluorinated inorganic material layer exhibiting, so that the amphiphobic coating exhibits a nanostructured surface having

i. a static water contact angle > 110°, preferably ≥ 120°, preferably ≥ 140° measured at room temperature with a sessile drop method using 1 $\mu$l per drop deionized water,

ii. a static n-hexadecane contact angle ≥ 60°, preferably ≥ 80°, more preferably ≥ 100° measured at room temperature with a sessile drop method using 1 $\mu$l per drop n-hexadecane,

iii. optionally a melted sebum contact angle ≥ 60°, preferably ≥ 80° measured at 50°C with a sessile drop method using 1.8 to 2.8 $\mu$l per drop synthetic sebum, and

iv. optionally a surface energy ≤ 20 mJ/m$^2$, preferable ≤ 15 mJ/m$^2$, more preferable ≤ 10 mJ/m$^2$ determined with the Owens, Wendt, Rabel and Kaelble (OWRK) method.

According to an embodiment of all aspects of the present invention, the layer of inorganic material has a mean thickness of less than 1 $\mu$m, preferably ≤ 700 nm, more preferably has a mean thickness in the range of 100 nm to 500 nm, even more preferably 200 nm to 400 nm. Such a layer thickness facilitates the maintenance of the look and feel of the cellulosic banknote substrate. In particular, the inorganic material layer thickness may facilitate an increased resistance to mechanical stress and/or an increased resistance to chemical stress while maintaining the look and feel of the cellulosic banknote substrate, when compared to cellulosic banknote not comprising the amphiphobic coating. In particular, the inorganic material has a mean thickness of less than 1 $\mu$m, preferably 200 to 400 nm, as it then does not interfere with the look and feel of security features, such as optically variable security features (micro lens patch or structures, hologram features, watermarks or foil features etc.), etc. Such a mean thickness of inorganic material layer is obtainable by using particles of inorganic material with a mean particle diameter in the range of 30 to 100 nm and a low concentrated coating solution to achieve a single to a few nanoparticle layers of inorganic material.

According to a further alternative or cumulative embodiment of the present invention, the organic fluoro material is configured as a molecular layer on at least part of the nanostructured surface of the inorganic material layer. The organic fluoro material may be applied by dip coating, roller coating, such as flexographic (FLEXO) printing, spin coating, spray coating or any other Molecular Layer Deposition techniques.

Suitable organic fluoro materials are readily commercially available, such as Krytox® 100, Krytox ® 103 and Krytox® 105 (DuPont) as examples for perfluoropolyalkylethers; AFW in water (CHEM SPEC/DuPont) as example for acrylic fluoropolymers, and Dynasylan® SIVO Clear EC in alcohol (EVONIK) as example for fluoroalkylsilane polymers. The organic fluoro materials mainly facilitate the oil repellence of the inventive amphiphobic cellulosic banknote. Furthermore, the organic fluoro material retains the authentication of one or more security features in particular selected from the group consisting of optical features (hologram, watermark, micro-lens patch or structures or foil features etc.), magnetic features, luminescent features, e.g. UV feature, infrared (IR) absorbing or emitting features, and electroluminescent features.

According to a further alternative or cumulative embodiment of the present invention, the cellulosic banknote substrate comprises a printed layer and/or a foil layer arranged between the cellulosic banknote substrate and the layer of the inorganic material, wherein the printed layer extends over at least part of the surface of the cellulosic banknote substrate and/or wherein the foil layer extends over at least part of the surface of the cellulosic banknote substrate. Cellulosic banknote substrate comprises one or more prints, preferably security prints on the surface of the paper substrate. Alternatively or cumulatively, the paper substrate as cellulosic banknote substrate comprises tactile features or optical features. The amphiphobic coating essentially maintains the look and/or feel of the print layer and/or security features represented on the foil layer and/or tactile features and/or other optical features of the banknote substrate.

According to the second aspect of the present invention, the process for preparing an inventive cellulosic banknote is provided. All embodiments of the first aspect of the present invention in any suitable combination are also applicable for the second aspect of the present invention.

According to step a) of the inventive process, a cellulosic banknote substrate having a surface is provided. The banknote comprises all security features, print layers, foil features, tactile features and/or optical features is provided in step a) of the inventive process.

According to step b) of the inventive process, inorganic material selected from the group consisting of ceramic oxides is provided. As already set out hereinbefore, the inorganic material may be selected from the group consisting of $Al_2O_3$, $TiO_2$, $SiO_2$, $Y_2O_3$, ZnO and $ZrO_2$, preferably $Al_2O_3$, $TiO_2$ and $SiO_2$, more preferably $TiO_2$ and $SiO_2$. Preferably the inorganic material is generally provided with a mean particle diameter of $\leq 200$ nm, more preferably, $\leq 100$ nm, even more preferred in the range from 1 to 80 nm, even more preferred in the range com 30 to 70 nm. Suitably, according to a further alternative or cumulative embodiment, the inorganic material may be provided as a sol in a suitable dispersing agent, preferably selected from the group of alcohol, water and water containing medium. The inorganic material may in particular be prepared by an *in situ* reaction such as described, e.g. in EP 2 681 347B1 and EP 2 864 522 B1. As the use of alcohol as dispersing agent may cause environmental and safety problems when scaling up the process, water is preferably used as dispersing agent. The sol comprising the inorganic material may facilitate wet application of the inorganic material onto the cellulose material substrate. In particular in case the inorganic material has a mean particle diameter of $\leq 100$ nm a sol of the inorganic material in a suitable dispersing agent provides a prolonged stability for up to 18 months. Such low gelification and precipitation rate is adequate for the industrial application.

According to step c) of the inventive process, organic fluoro material selected from the group consisting of fluoroalkylsilane polymers (FAS), acrylic fluoropolymers, and perfluoropolyalkylether polymers is provided. Detailed information on suitable organic fluoro material is provided with respect to the first aspect of the present invention. Optionally one or more suitable solvent agents may be added to achieve a suitable viscosity for the coating step e).

According to step d) of the inventive process, at least part of the surface of the cellulosic banknote substrate is coated with the inorganic material, e.g. a sol of the inorganic material thereby forming an inorganic material layer exhibiting a nanostructured surface. Preferably, the inorganic material layer has one or more, more preferably one, two or three layers of inorganic material. Generally, the coating step d) may be conducted by wet application of the inorganic material. The cellulosic banknote substrate may be coated by dip coating, roller coating, such as flexographic (FLEXO) printing, spray coating or spin coating, preferably by dip coating or flexographic printing. Furthermore, a suitable drying step may optionally be conducted to remove the solvent of the inorganic material and a curing step may optionally be conducted to fix the inorganic material location. The drying step and the curing step may be conducted separately or in combination. The drying and/or curing step may optionally be conducted by thermal treatment, in particular by heating the inorganic material layer to a temperature in the range of 60 °C to 140 °C, more preferably 80 °C to 120 °C. Alternatively, as the solvent penetrates into the cellulosic banknote, whereby the rearrangement of the inorganic material for building the nanostructured layer surface is facilitated, the drying and/or curing step may be postponed, i.e. may not be conducted after application of the inorganic material in step d), but may be conducted after application of the organic fluoro material in step e) to reduce and, thus, optimize production time and production costs. In case the surface of the inorganic material after optional drying does not exhibit a suitable nanostructure, a subsequent structuring step of the inorganic material layer may be conducted. As an example, the structuring step can be conducted by hydrolyzing the surface (inorganic material layer in contact with, e.g., boiling water) thereby creating hydroxy functional groups to increase surface reactivity and modify the surface texture.

According to step e) of the inventive process, at least part of the surface of the inorganic material layer is coated with the organic fluoro material thereby forming a fluorinated nanostructured surface of the layer of inorganic material. Generally, the coating step e) is conducted by applying one, two, or more, preferably one or two times the fluoro material in wet form and conducting a suitable curing step. The organic fluoro material may be applied by any suitable method, e.g. dip coating, roller coating, such as flexographic (FLEXO) printing, spin coating, spray coating or any other Molecular Layer Deposition technique, preferably dip coating. Preferably the organic fluoro material is applied in form of a molecular layer. Optionally a drying and/or curing step as already described with respect to step d) of the inventive preparation process can be generally performed after application of the organic fluoro material. The drying and/or curing step may optionally be conducted at a temperature in the range of 60 °C to 140 °C, preferably 80 °C to 120 °C. This drying and/or curing step may also facilitate drying the cellulosic banknote from the solvent used for application of the inorganic material in step d).

All embodiments disclosed with respect to the first and second aspect of the present invention in particular comprising all suitable combinations also apply with the third aspect of the present invention concerning the use of the amphiphobic coating as set out hereinbefore for increase of dirt resistance and/or lifetime of a cellulosic banknote.

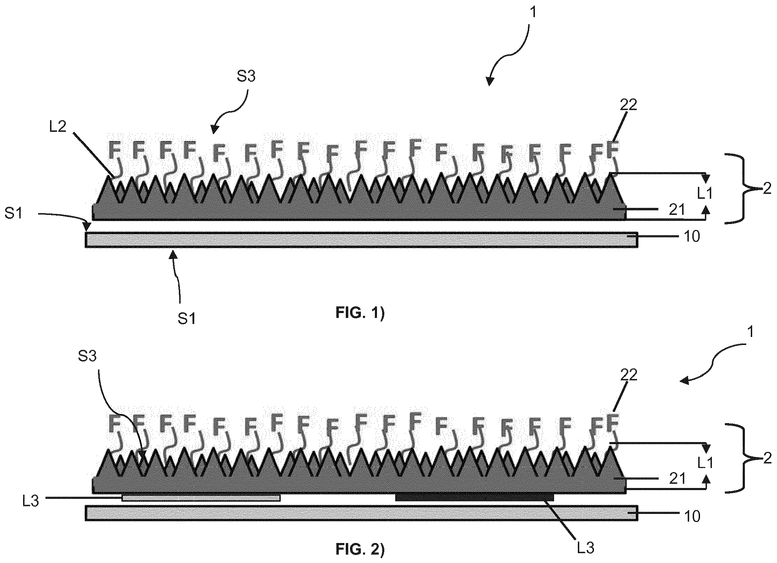

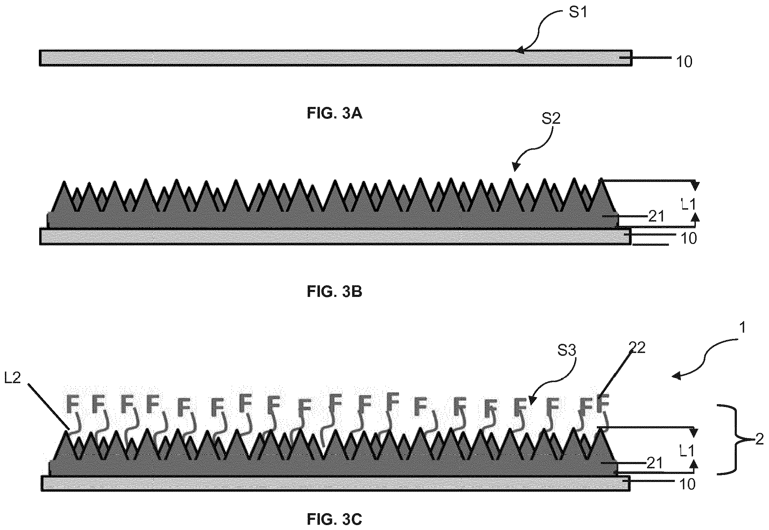

FIG. 1 is a simplified cross-sectional view on a cellulosic banknote 1 of an embodiment of the present invention. The cellulosic banknote 1 comprises a cellulosic banknote substrate 10 and an amphiphobic coating 2 comprising an inorganic material 21 and an organic fluoro material 22. The amphiphobic coating 2 is arranged on at least part of a surface S1 of the cellulosic banknote substrate 10. Due to the exploded view, the amphiphobic coating is displayed not in contact with the cellulosic banknote substrate 10, however, the amphiphobic coating is in direct contact with the surface S1 of the cellulosic banknote substrate 10 including any items arranged on the surface S1 of the cellulosic banknote substrate 10 (see FIG. 2 below). The inorganic material 21 is configured as a layer L1 having a nanostructured surface S2 (not shown in FIG 1, see FIG 3B) on at least part of the surface S1 of the cellulosic banknote substrate 10. The nanostructured surface S2 of the layer L1 of the inorganic material 21 is at least partly fluorinated with the organic fluoro material 22. The fluorination is schematically represented by the chemical sign "F". The dimensions are not in true relation with the manufactured embodiment. Preferably, the organic fluoro material 22 is applied to the layer L1 of the inorganic material as a molecular layer L2. Molecular layer L2 means that the organic fluoro material 22 is present in a mean thickness of one molecule of the organic fluoro material 22. The amphiphobic coating 2 exhibits a nanostructured surface S3 having

    i. a static water contact angle > 110°, preferably $\geq$ 120°, preferably $\geq$ 140° measured at room temperature with a sessile drop method using 1 $\mu$l per drop deionized water,

    ii. a static n-hexadecane contact angle $\geq$ 60°, preferably $\geq$ 80°, more preferably $\geq$ 100° measured at room temperature with a sessile drop method using 1 $\mu$l per drop n-hexadecane,

    iii. optionally a melted sebum contact angle $\geq$ 80° measured at 50 °C with a sessile drop method using 1 $\mu$l per drop synthetic sebum, and

    iv. optionally a surface energy $\leq$ 20 mJ/m$^2$, preferable $\leq$ 15 mJ/m$^2$, more preferable $\leq$ 10 mJ/m$^2$ determined with the Owens, Wendt, Rabel and Kaelble (OWRK) method.

According to an embodiment of the present invention, the layer L1 of inorganic material 21 has generally a mean thickness of less than 1 $\mu$m, preferably $\leq$ 700 nm, more preferably has a mean thickness in the range of 50 nm to 500 nm, even more preferably 200 nm to 400 nm. The mean thickness of the inorganic material 21 facilitates the maintenance of the look and feel of the cellulosic banknote. Furthermore, it facilitates that security features on or in banknotes may still be authenticated.

According to the present invention, the inorganic material 21 is selected from the group consisting of ceramic oxides, preferably $Al_2O_3$, $TiO_2$, $SiO_2$, $Y_2O_3$, ZnO and $ZrO_2$. Preferably $Al_2O_3$, $TiO_2$ and $SiO_2$ are used, as they do not negatively interfere with environment. According to an embodiment the inorganic material 21 is $TiO_2$ or $SiO_2$, as when using $Al_2O_3$ a nanostructuring step prior to the optional drying step or prior to the application of the organic fluoro material may be necessary.

According to the present invention, the organic fluoro material 22 is selected from the group consisting of fluoroalkylsilane polymers (FAS), acrylic fluoropolymers, and perfluoropolyalkylether polymers.

FIG. 2 is a simplified cross-sectional view on a cellulosic banknote of an alternative embodiment of the present invention. The cellulosic banknote 1 of FIG 2 only differs from the cellulosic banknote of FIG. 1 in that a printed layer L3 and a foil layer L4 is arranged between the cellulosic banknote 1 and the layer L1 of the inorganic material 21. In FIG. 3 the printed layer L3 and the foil layer L4 are arranged separately from each other and they respectively extend over part of the surface S1 of the cellulosic banknote substrate 10. Other overlapping arrangements are also possible. Due to the exploded view, the cellulosic banknote substrate 10, the printed layer L3, the foil layer L4 and the layer L1 of inorganic material are shown not in direct contact with each other. However, when manufactured, the cellulosic banknote substrate 10, the printed layer L3, the foil layer L4 and the layer L1 of inorganic material are respectively in direct contact with each other. The cellulosic banknote substrate of FIG. 2 is a banknote comprising one or more security prints and/or other print layers L3 and one or more foil layers L4, a so called final banknote.

As shown in the example section, the inventive amphiphobic banknotes show an improved repellence against water, oil/fats and sebum in comparison to the uncoated comparative banknote and real banknotes prior to circulation (see example section item 6), while maintaining the optical, tactile, aesthetical and colorimetric parameters unchanged with respect to the uncoated comparative banknote. In particular the results of a static water contact angle measurements show, that the inventive amphiphobic banknotes have a static water contact angle of $> 110°$, preferably $\geq 120°$, more preferably $\geq 140°$, whereas the water is absorbed by the comparative banknotes (see example section, item 6). Moreover, the static n-hexadecane contact angle of the inventive banknote is $\geq 60°$, preferably $\geq 80°$, more preferably $\geq 100°$, whereas the comparative banknotes absorb the n-hexadecane (see example section, item 6). In addition the inventive amphiphobic banknotes exhibit at 50° C a melted sebum contact angle of $\geq 60°$, more preferably $\geq 80°$, whereas the comparative banknotes absorb the synthetic sebum at 50 °C (see example section, item 6). Furthermore, the inventive banknotes exhibit a surface energy $\leq 20$ mJ/m$^2$, preferable $\leq 15$ mJ/m$^2$, more preferable $\leq 10$ mJ/m$^2$ determined with the Owens, Wendt, Rabel and Kaelble (OWRK) method (see example section, item 6). Finally, the inventive amphiphobic banknotes fulfill further requirements concerning durability, in particular UV exposure, Abrasion (in particular using UNI EN 1096-2 standard for coated glass), Crumpling (using Giesecke & Devrient Balloon Tester so called G&D LTT-1 Life Time Circulation Tester) and Washing (washing test and washing machine test).

Figures 3A), 3B), and 3C) show simplified views of process steps of an embodiment of the present invention.

FIG. 3A schematically shows the process step a) of an embodiment of the invention, wherein a cellulosic banknote substrate 10 having a surface S1 is provided. The cellulosic banknote substrate 10 is a banknote, which comprises all security features and other print and foil layers (not separately viewed in FIG. 3A). In an embodiment the surface S1 of the cellulosic banknote substrate 10 may be pre-treated by washing or plasma treatment to clean the surface S1 and enhance bonding of the inorganic material 21 after deposition in step d) of the invention. In order to optimize the production procedure no pre-treatments may be conducted.

FIG 3B schematically shows the result of process step d) of an embodiment of the invention, wherein at least part of the surface S1 of the cellulosic banknote substrate 10 is coated with the inorganic material 21 thereby forming an inorganic material layer L1 exhibiting a nanostructured surface S2.

FIG 3C schematically shows the result of process step e) of an embodiment of the invention, wherein at least part of the surface S2 of the inorganic material layer L1 is coated with the organic fluoro material 22 thereby forming a fluorinated inorganic material layer exhibiting a nanostructured surface S3 of the amphiphobic coating 2.

According to an embodiment of the invention, the inorganic material 21, in particular Al$_2$O$_3$, TiO$_2$ and/or SiO$_2$, preferably TiO$_2$ and/or SiO$_2$, has a mean particle diameter of $\leq 200$ nm, more preferably, $\leq 100$ nm, even more preferred in the range from 1 to 80 nm, even more preferred in the range com 30 to 70 nm. According to an embodiment of the invention, the inorganic material is provided dispersed in a dispersing agent forming a sol. According to an embodiment of the invention, the dispersing agent is isopropyl alcohol or water. Water is preferred as dispersing agent, as it does not cause environmental or production safety concern.

According to an embodiment of the invention, the coating step d) is performed by applying the sol of partially hydrolyzed Al$_2$O$_3$, TiO$_2$ or SiO$_2$ as the inorganic material 21 onto at least part of the surface S1 of the cellulosic banknote substrate 10 thereby forming a gel film of inorganic material 21. The wet application of the inorganic material 21 can be conducted by any suitable method, in particular including dip coating, roller coating, such as flexographic (FLEXO) printing, spray coating and spin coating etc.. According to an embodiment of the invention, the deposition of the sol film on the cellulosic banknote substrate 10 is performed with a dip coater using a constant immersion and emersion speed of 120 mm/min and a static immersion (soak) time of 5 seconds in the sol (+/- 10 % deviation respectively). During withdrawal of the banknote from the coating suspension, evaporation of the dispersing medium at room temperature starts as well as penetration of the dispersing medium into the cellulosic banknote, thus leading to a rearrangement of the ceramic oxide nanoparticles, in particular Al$_2$O$_3$, TiO$_2$ or SiO$_2$ nanoparticles, to form the nanostructured layer surface. Such nanoscale coating is adhering to the banknote surface. The formation of the nanostructured surface S2 of the inorganic material layer L1 may be facilitated without even drying the wet cellulosic banknote, as the solvent also penetrates into the cellulosic banknote thereby rearranging the ceramic oxide nanoparticles. However, to reduce the drying time, the banknote may be dried by thermal application after application of the inorganic material layer L1 or after application of the organic fluoro material layer L2. However, in case a drying step may be conducted, then the coated banknote may preferably be dried in a static furnace in air at 120 °C for up to 10 minutes.

Alternatively, the inorganic material 21 may be applied to the surface of the cellulosic banknote substrate 10 by flexographic printing.

According to an alternative embodiment of the invention, in particular when $Al_2O_3$ is used as inorganic material 21, the cellulosic banknote substrate 10 comprising the coated gel film of $Al_2O_3$ is nanostructured and then optionally dried and/or cured. Alternatively, the nanostructuring with $Al_2O_3$ can be performed by immersing the cellulosic banknote substrate 10, in particular banknote, comprising the coated sol film of $Al_2O_3$ in boiling water for up to 30 minutes to increase surface reactivity by creating hydroxy functional groups and by modifying the surface texture. Subsequently, the nanostructured sol film of $Al_2O_3$ is optionally dried and/or cured. Drying and/or curing is preferably performed at 120 °C for up to 10 minutes.

According to an embodiment of the invention, the coating step e) is performed by a suitable wet coating technique, such as dip coating, roller coating, such as flexographic (FLEXO) printing, spin coating, spray coating or any other Molecular Layer Deposition technique. As an example the cellulosic banknote substrate 10 comprising the nanostructured layer L1 of inorganic material 21 is dip coated into a solution of organic fluoro materials, e.g., fluoroalkylsilanes or acrylic fluoropolymers with an immersion and emersion speed of 120 mm/min and immersion (soak) time of up to 2 minutes (+/- 10 % deviation respectively). The cellulosic banknote substrate 10 comprising the organic fluoro material 22 is withdrawn from the solution. The organic fluoro material 22 is applied once or two times to form the molecular layer L2. In other words, the organic fluoro material layer L2 does not add substantial thickness to the thickness of the inorganic material layer L1. Thus, the thickness of the amphiphobic coating 2 essentially relates to the thickness of the inorganic material 21, which is $\leq$ 1 $\mu$m, preferably $\leq$ 700 nm, more preferably is in the range from 50 nm to 400 nm. Subsequently, the cellulosic banknote substrate 10 comprising the organic fluoro material 22 is cured at a temperature in the range of 60 °C to 140 °C, preferably at 80 °C to 120 °C for up to 30 minutes to promote fluorination of the ceramic oxide layer.

The embodiments disclosed with respect to the FIG.1, FIG.2, FIG.3A, 3B and 3C may be combined separately or in any (sub)combination with the general disclosure of all aspects of the invention set out hereinbefore.

In order to facilitate the scale-up of the process, adjustments to the process described hereinbefore may be conducted.

As far as the deposition method of the inorganic material 21 or the organic fluoropolymer 22 is concerned, dip coating can be performed at different withdrawal speed to tune film thickness, to obtain different structures and to adapt the amphiphobic coating to the substrate. Dipcoating may also be replaced by different techniques, such as roller coating, such as flexographic (FLEXO) printing, spin coating or spray coating. In the specific case of banknotes as cellulosic banknote substrate 10, dip coating can be supported or replaced by techniques like roller printing to better simulate the current deposition processes of protective layers on banknotes.

**EXAMPLES**

The present invention is described in the following on the basis of exemplary embodiments, which merely serve as examples and which shall not limit the scope of the present protective right. The exemplified features may be combined separately or in any (sub)combination with the general disclosure of all aspects of the invention as set out hereinbefore.

**1. Materials**

**1.1 Preparation of sol comprising $Al_2O_3$ nanoparticles**

**1.1a) Preparation of sol comprising $Al_2O_3$ nanoparticles in water (also referred to as "$Al_2O_3$-aqu")**

A colloidal suspension of alumina was prepared by peptization of aluminum tri-sec butoxide 0.5 M in aqueous solution in the presence of nitric acid as the acidic catalyst. The reactions of hydrolysis and condensation which lead to the formation of the sol occur keeping the system under stirring at 80 °C. The molar ratios of the sol are as follows:

aluminum tri-sec-butoxide : water: nitric acid = 1 : 100 : 0.07

**1.1b) Preparation of sol comprising $Al_2O_3$ nanoparticles in alcohol (also referred to as "$Al_2O_3$-IPA")**

A colloidal suspension 0.5 M of aluminium tri-sec-butoxide ($Al(O$-$sec$-$Bu)_3$) in isopropyl alcohol was prepared.

Preferably the atmosphere exhibits a low relative humidity (RH), such as RH of 5 % or lower. The suspension was kept under stirring for one hour. Then, a chelating agent was added in order to prevent formation of undesirable precipitates and guarantee homogeneity of the final suspension. The suspension was kept under stirring for three hours. Finally, to promote hydrolysis of the alkoxide a calculated amount of water was added, with consequent variation of the colour of the suspension from colourless to yellow, corresponding to the formation of dispersed nanoparticles (sol). The molar ratios of the sol were the following:

aluminium tri-sec-butoxide : isopropyl alcohol: ethyl acetate : water = 1 : 20 : 1 : 4

**1.1c) Provision of TiO$_2$ sol 1.5% (also referred to as "TN1.5")**

The suspension of TiO$_2$ with a concentration of 1.5% in water is prepared using the commercially available suspension of titania 6% in H$_2$O (Colorobbia Italia, product code PH 000026) and subsequent dilution with water (neutral pH).

**1.1d) Provision of TiO$_2$ sol 3% (also referred to as "TN3")**

The suspension of TiO$_2$ with a concentration of 3% in water is prepared using the commercially available suspension of titania 6% in H$_2$O (Colorobbia Italia, product code PH 000026) and subsequent dilution with water (neutral pH).

**1.1e) Provision of TiO$_2$ sol 3% (also referred to as "TAC")**

The suspension of TiO$_2$ "TAC" with a concentration of 3% in water is prepared using the commercially available suspension of titania nanosol 6% in H$_2$O (Colorobbia Italia, product code NAMA41) and subsequent dilution with water (neutral pH).

**1.1f) Preparation of TiO$_2$ sol 3% (also referred to as "TAC-R")**

The suspension of TiO$_2$ "TACR" with a concentration of 3% in water is prepared by treating a suspension of TiO2 sol "TAC" 3% (1.2c) with a weak anion exchange resin (Dowex 66 anion exchange from Sigma Aldrich). The anion exchange resin was added while monitoring the pH. The resin was able to sequester Cl$^-$ ions and release OH$^-$ ions with a consequent increase in pH. Once the required pH value of 4.5 is reached, the resin was removed by simple separation. The pH obtained in the purified sample (TAC-R) was 4.5.

**1.1g) Preparation of SiO$_2$ sol**

The sol of SiO$_2$ with a concentration of 4% in water is prepared using the commercially available suspension of colloidal silica 40 wt% in water LUDOX® HS-40 (from Sigma-Aldrich, product number 420816) and subsequent dilution with water (neutral pH).

**1.2 Organic fluoro material**

**1.2a) Acrylic fluoropolymers: AFW in water (CHEM SPEC)**

10% AFW in water as delivered from supplier (CHEM SPEC)

**1.2b) Perfluoropolyalkylethers: Krytox® 100, Krytox® 103 and Krytox® 105 (DuPont)**

All Krytox® oils were obtained from supplier (DuPont)

**1.3 Substrate**

**1.3a) Test Banknote**

A test banknote is prepared to carry out the test for the inventive coating with the following characteristics.
Vellum banknote substrate paper comprises offset and intaglio print, foil element comprising micro lens security feature, watermark, window feature, graphics (inks do not comprise IR absorbing or emitting pigments, UV luminescent pigments and OVMI pigments).

**1.3b) Calendered Vellum banknote paper**

Vellum banknote substrate paper with size of 350 x 450 mm is calendered on a KBA Mini Orlof. The plate was intaglio printing plate without engraving 0,85 mm thickness. The approximately pressure was 45 t and the temperature 55° C.

**2. Preparation of inventive amphiphobic coating on test banknote (Examples of 1 to 13)**

| Example | Substrate | Inorganic | 1st organic | 2nd organic |
|---|---|---|---|---|
| 1 | 1.3a) | 1.1f TAC_R | 1.2a AFW | |
| 2 | 1.3a) | 1.1f TAC_R | 1.2a AFW | 1.2b Krytox |
| 3 | 1.3a) | 1.1d TN3 | 1.2a AFW | |
| 4 | 1.3a) | 1.1d TN3 | 1.2a AFW | 1.2b Krytox |
| 5 | 1.3a) | 1.1cTN1.5 | 1.2a AFW | |
| 6 | 1.3a) | 1.1cTN1.5 | 1.2a AFW | 1.2b Krytox |
| 7 | 1.3a) | 1.1e TAC | 1.2a AFW | |
| 8 | 1.3a) | 1.1e TAC | 1.2a AFW | 1.2b Krytox |
| 9 | 1.3a) | 1.1g $SiO_2$ | 1.2a AFW | |
| 10 | 1.3a) | 1.1g $SiO_2$ | 1.2a AFW | 1.2b Krytox |
| 11 | 1.3a) | 1.1b $Al_2O_3$-IPA | 1.2a AFW | 1.2b Krytox |
| 12 | 1.3a) | 1.1b $Al_2O_3$-IPA | 1.2a AFW | |
| 13 | 1.3a) | 1.1a $Al_2O_3$-aqu | 1.2a AFW | |

**2.1 Coating deposition of inorganic material**

The $Al_2O_3$, $TiO_2$ or $SiO_2$ sols as prepared above under items 1.1a) to 1.1f) are deposited by dip-coating (AUREL Automation equipment) on the test banknote sample 1.3a) with an immersion and emersion speed of 120 mm/minute and a residence time of 5 seconds. During the deposition the suspension can be kept under stirring.
The beaker capacity and suspensions volumes are variable according to the size of coated samples to be produced. The following example can be considered a typical example: for a banknote sample having the size of about 7.5 x 6.5 cm, the typical size of a beaker is 600 ml, the amount of inorganic or organic suspensions is 500 ml.
After the deposition, the banknote is taken out and the remaining solution is removed by gently shaking. The note is stored at room temperature for 1 hour and afterwards optionally cured in an oven at 120°C for 10 minutes in order to optimize drying time.

**2.2 Coating deposition of organic material**

The organic layer 1.2a) (AFW 10% solution in water) is deposited on at least part of the inorganic layer coating (see item 2.1) above).
The deposition instrument (AUREL Automation equipment) is the same as disclosed under item 2.1) above, wherein the immersion and emersion speed is 120 mm/minute and the residence time is up to 2 minutes including the storing conditions and drying step as set out under item 2.1).

**2.3 2nd Coating deposition of organic material (examples 2, 4, 6, 8, 10 and 11)**

The second organic layer 1.2b (Krytox 100) is deposited on at least part of the inorganic and the first organic layer coating (see items 2.1 and 2.2 above).

The deposition instrument (AUREL Automation equipment) is the same as disclosed under item 2.1) above, wherein the immersion and emersion speed is 120 mm/minute and the residence time is up to 2 minutes the storing conditions and drying step as set out under item 2.1).

## 3. Preparation of inventive amphiphobic coating on calendered vellum banknote (Examples 14 and 15)

| Example | Substrate | Inorganic layer Roller Printer | 1st organic |
|---|---|---|---|
| **14** | 1.3b) | 1.1g $SiO_2$ | AFW |
| **15** | 1.3b) | 1.1c TN1.5 | AFW |

### 3.1 Coating deposition of inorganic material

The $TiO_2$ and $SiO_2$ sols as prepared above under items 1.1a) to 1.1f) are deposited on calendered banknote paper (1.3b) by a roller coater with a roller height of 12.3-12.5mm, a roller speed of 15m/min, a tape speed of 16 m/min, a blade angle of -1 to 0 degree and a blade height of 261 mm.

The Anilox (company Cheshire, roller no. M482) used for the roller coater application has the following parameter: length 722 mm, finished diameter 229 mm line screening 30 L/cm, engraving angle 45°, engraving type TWINFLO and hexagonal holes with total opening > 280 $\mu$m, cell opening > 250 $\mu$m and cell wall > 35 $\mu$m.

After the deposition, the paper is collected, stored at room temperature for 1 hour and afterwards optionally cured in an oven at 120°C for 10 minutes.

### 3.2 Coating deposition of organic material

The organic layer 1.2a) (AFW 10% solution in water) is deposited on at least part of the inorganic layer coating on a 50 x 30 mm piece cut out of the banknote paper produced according to 3.1) by dip-coating (AUREL Automation equipment) with an immersion and emersion speed of 120 mm/minute and a residence time of 2 seconds. During the deposition the suspension can be kept under stirring.

The beaker capacity and suspensions volumes are variable according to the size of coated samples to be produced. The following example can be considered a typical example: for a banknote sample having the size of about 7.5 x 6.5 cm, the typical size of a beaker is 600 ml, the amount of organic suspensions is 500 ml.

After the deposition, the banknote is taken out and the remaining solution is removed by gently shaking. The note is stored at room temperature for 1 hour and afterwards optionally cured in an oven at 120°C for 10 minutes.

## 4. Preparation of inventive amphiphobic coating on calendered vellum banknote (Examples 16 and 17)

| Example | Substrate | Inorganic layer Flexo Printing | 1st organic |
|---|---|---|---|
| **16** | 1.3b) | 1.1g $SiO_2$ | AFW |
| **17** | 1.3b) | 1.1c TN1.5 | AFW |

### 4.1. Coating deposition of inorganic material

The $TiO_2$ and $SiO_2$ sols as prepared above under items 1.1 a) to f) are deposited on calendered banknote paper (1.3b) by flexographic printing step on a Heidelberg GTO with a customized plug-on flexographic unit. The machine speed was 3000 sheets per hour. The Anilox (company Zecher, number: KG20171000) used for flexographic application has the following parameter: screening 120 L/cm, engraving angle 45°, depth 22 $\mu$m, wall/cell ratio 1:12, volume 9.0 $cm^3/m2$.

After the deposition, the paper is collected, stored at room temperature for 1 hour and afterwards optionally cured in an oven at 120°C for 10 minutes in order to optimize drying time.

**4.2 Coating deposition of organic material**

The organic layer 1.2a (AFW 10% solution in water) is deposited on at least part of the inorganic layer coating on a 50x30 mm piece cut out of the banknote paper produced according to 4.1 by dip-coating (AUREL Automation equipment) with an immersion and emersion speed of 120 mm/minute and a residence time of 2 seconds. During the deposition the suspension can be kept under stirring.

The beaker capacity and suspensions volumes are variable according to the size of coated samples to be produced. The following example can be considered a typical example: for a banknote sample having the size of about 7.5 x 6.5 cm, the typical size of a beaker is 600 ml, the amount of organic suspensions is 500 ml.

After the deposition, the banknote is taken out and the remaining solution is removed by gently shaking. The note is stored at room temperature for 1 hour and afterwards optionally cured in an oven at 120°C for 10 minutes in order to optimize drying time.

**5. Comparative examples**

For carrying out the wettability and durability tests, the following test banknotes are used:

- Uncoated test banknotes as described under item 1.3a above (Comparative Example 1)
- Uncoated pre-calendered banknote paper as described under 1.3b above (Comparative Example 2)
- Real new banknotes (denomination 10 €,) prior to circulation in the public, wherein the real banknotes already comprise a coating, which shall prevent staining and increase lifetime of banknote in circulation while not impacting any of the desired banknote features like feel and look or machine readability (Comparative Example 3)

**6. Comparison of results of surface properties of the inventive amphiphobic banknotes versus comparative banknote**

**6.1 Description of Test methods:**

**6.1.a) Water, n-hexadecane and sebum contact angle measurements**

Contact angle measurements were performed by use of the optical tensiometer OCA 15 Plus (DataPhysic Instruments) equipped with a CCD camera.

Measurements of static contact angle with deionized water (WCA) and n-hexadecane ($CA_{n\text{-hexa}}$) were carried out at room temperature with the sessile drop method (drop volume of 1 μl).

The contact angle between banknote surface (kept T at 50°C) and molten drops of synthetic sebum (volume drop 1.8 to 2.8 μl of synthetic sebum according to Bey, wfk - Testgewebe GmbH) was also determined by sessile drop method using the optical tensiometer OCA 15 Plus (DataPhysic Instruments) equipped with a CCD camera.

**6.1.b) Surface energy determined with the OWRK method**

Surface energy (SE) of paper surfaces was calculated with the Owens-Wendt-Rabel-Kaeble (OWRK) method. It is based on the measurement of contact angles with drops of two test liquids with known surface tension ST and surface tension components, namely the disperse component $ST^d$ and the polar component $ST^p$. Water and n-hexadecane were used as test liquids and their surface tension components are reported in the following table:

| Liquid | ST (mN/m) at 20°C | $ST^d$ (mN/m) | $ST^p$ (mN/m) |
|---|---|---|---|
| water | 72.8 | 21.8 | 50.0 |
| n-hexadecane | 27.6 | 27.6 | 0 |

For each test liquid, the contact angle CA is measured (in this case, WCA and $CA_{n\text{-hexa}}$). Values for CA, ST, $ST^d$ and $ST^p$ for each liquid are inserted into the following linear equation:

$$\frac{1 + \cos CA}{2} * \frac{ST}{\sqrt{ST^d}} = \sqrt{SE^p} * \sqrt{\frac{ST^p}{ST^d}} + \sqrt{SE^d}$$

The slope of this line is the square root of the polar surface energy SE$^P$, while the intercept is the square root of the disperse surface energy SE$^d$, respectively.

For each test liquid, a point is identified on the $\frac{1+\cos CA}{2} * \frac{ST}{\sqrt{ST^d}}$ vs. $\sqrt{\frac{ST^p}{ST^d}}$ graph; the linear interpolation provides SE$^p$ and SE$^d$ values. Total surface energy SE is the sum of SE$^p$ and SE$^d$.

**6.1.c) UV Exposure test:**

The resistance of a banknote against UV radiation may be checked keeping the inventively coated cellulosic banknote substrates (having a typical size of 5 cm x 3 cm) under an Osram Ultra-Vitalux 300W lamp at an irradiation intensity of 5.0 $\pm$ 0.2 mW/cm2 for 8 hours. The wetting performances may subsequently be tested after cooling the samples for 10 min at room conditions.

**6.1d) Washing Test:**

The resistance of a banknote to washing may be tested by filling a bowl (min 5 L volume) with 4 liters warm water (40 +/- 2 deg.) and adding with a 5 ml lab plastic pipette 3 drops Tinopal (TINOPAL CBS SP Slurry 33, Ciba Chemicals 119877906) and subsequently mixing the solution. This mixture can be used for 10 banknotes.

The inventively coated banknotes are applied to the bowl and immersed for 10 minutes into the prepared water mixture. The inventively coated banknote is subsequently taken out from the water mixture and the liquid mixture is further removed by gentle shaking. The banknote is subsequently dried by using paper towels, whereby both sides of the inventively coated banknote is covered with 3 to 5 paper towels, a pressure (at least 500 g over the area of the banknotes) is applied and the banknote is subsequently dried for at least 1 hour. When dry, the quality of the banknote is checked with respective test methods, such as UV/light. Inventively coated banknotes fulfilling the washing test requirements shine brightly. In homogeneities in brightness correspond to a crumple pattern and indicate that the coating is destroyed during crumpling.

**6.1e) Washing machine Test, hot (60°C):**

The resistance of a banknote to washing may alternatively be tested with a washing machine having a spin drier (600 rpm) programmed for domestic use.

**Materials:**

   a) detergent for machine washing:

   •    ECE non-phosphate reference detergent A as used in the ISO 105-C09 - Annex A.

   b) Quantity of detergent:

   •    4 g/1 for ECE non-phosphate reference

   c) deionised water

   d) 20 washing gloves + safety pins:
   The number of gloves in the machine must always be 20. In case fewer banknote samples are treated, empty gloves must be added.

**Procedure:**

   1. Set the machine for half load - main wash (2.5 kg), without pre-wash.

2. Put one banknote in each washing glove and fix the unfolded banknote with 2 safety pins, maximum 20 banknotes, inside the glove, while taking care not to damage the foil.

3. Place the 20 washing gloves into the machine.

4. Add the detergents in the soap dispenser.

5. The selected washing program should have a duration between 60 and 90 minutes.

6. Start the washing program. At the end of the washing program (spin dry completed) extract the gloves from the machine, remove the safety pins and take out the banknote samples.

7. Straighten the banknotes I samples and examine for damage.

8. Report the result.

**6.1f) Crumpling Test**

The crumpling test is performed with the Giesecke & Devrient Balloon Tester (G&D LTT-1 Life Time Circulation Tester) according to the manual. The Balloon tester consists of a sample chamber made of thick rubber that is connected to compressed air. The sample is placed into the thick rubber balloon without creasing the sample, and the balloon was thereafter inflated and deflated rapidly in a controlled and automatic manner with custom-built apparatus to mimic hand crumpling. In order to mimic banknotes in circulation, different cycles of inflating/deflating have been established and tested earlier. 7 cycles in the balloon correspond to a banknote that is still fit for circulation. 3-time repetition of 15 cycles of inflating/deflating (45 cycles in total) corresponds to unfit banknote. Both protocols were executed on the test notes and the results are compared to uncoated notes. After carrying out the inflating / deflating cycles, the quality of the banknote is checked with UV/light. Inventively coated banknotes fulfilling the crumple test requirements shine brightly. In homogeneities in brightness correspond to a crumple pattern and indicate that the coating is destroyed during crumpling.

**6.2 Comparative test results for contact angle and surface energy measurements**

**6.2a) Test results for inventive amphiphobic coating on test banknote substrates**

| Example | Inorganic | 1st organic | 2nd organic | WCA (°) | CAn-hex (°) | SE (mN/m) | CA (°) Sebum |
|---|---|---|---|---|---|---|---|
| 1 | 1.1f TAC_R | 1.2a AFW | | 133 ± 6 | 72 ± 5 | 12.1 ± 0.4 | 70 ± 7 |
| 2 | 1.1f TAC_R | 1.2a AFW | 1.2b Krytox | 126 ± 5 | 65 ± 2 | 13.9 ± 0.9 | 63 ± 5 |
| 3 | 1.1d TN3 | 1.2aAFW | | 122 ± 4 | 85 ± 8 | 8.3 ± 0.4 | 86 ± 4 |
| 4 | 1.1d TN3 | 1.2a AFW | 1.2b Krytox | 117 ± 7 | 67 ± 3 | 13.3 ± 0.6 | 82 ± 10 |
| 5 | 1.1c TN1.5 | 1.2aAFW | | 128 ± 6 | 82 ± 5 | 8.7 ± 0.4 | |
| 6 | 1.1c TN1.5 | 1.2aAFW | 1.2b Krytox | 120 ± 2 | 69 ± 3 | 12.5 ± 0.4 | |
| 7 | 1.1e TAC | 1.2aAFW | | 117 ± 3 | 71 ± 3 | 12.4 ± 0.5 | 75 ± 6 |
| 8 | 1.1e TAC | 1.2a AFW | 1.2b Krytox | 121 ± 3 | 63 ± 3 | 14.7 ± 0.8 | 63 ± 5 |
| 9 | 1.1g $SiO_2$ | 1.2a AFW | | 130 ± 5 | 77 ± 7 | 10.2 ± 0.5 | |
| 10 | 1.1g $SiO_2$ | 1.2a AFW | 1.2b Krytox | 118 ± 3 | 65 ± 3 | 13.8 ± 0.4 | |
| 11 | 1.1b $Al_2O_3$-IPA | 1.2a AFW | 1.2b Krytox | 125±3 | 68±5 | 13 | |
| 12 | 1.1b $Al_2O_3$-IPA | 1.2a AFW | | 137±7 | 102±6 | 4.4 | 109 ± 14 |
| 13 | 1.1a $Al_2O_3$-aqu | 1.2a AFW | | 123±6 | 70±6 | 12 | |

**6.2b) Test results for inventive amphiphobic coating on calendered vellum banknote substrates**

| Example | Inorganic layer Roller Printer | 1st organic | WCA (°) | CAn-hex (°) | SE (mN/m) |
|---------|-------------------------------|-------------|---------|-------------|-----------|
| 14 | 1.1g SiO$_2$ | AFW | 135±2 | 86±5 | 8±1 |
| 15 | 1.1c TN1.5 | AFW | 140±5 | 96±7 | 6±2 |

**6.2c) Test results for inventive amphiphobic coating on calendered vellum banknote substrates**

| Example | Inorganic layer Flexo Printing | 1st organic | WCA (°) | CAn-hex (°) | SE (mN/m) | CA (°) sebum |
|---------|-------------------------------|-------------|---------|-------------|-----------|--------------|
| 16 | 1.1g SiO$_2$ | AFW | 139±1 | 94±1 | 6±1 | 111±5 |
| 17 | 1.1c TN1.5 | AFW | 140±1 | 95±2 | 7±1 | 112±4 |

**6.2d) Comparative test results for inventive amphiphobic coating on test banknote substrates, pre-calendered banknote paper substrates and real banknotes prior to circulation**

| Comparative example | WCA (°) | CA$_{n-hex}$ (°) | SE (mN/m) | CA (°) sebum |
|---------------------|---------|------------------|-----------|--------------|
| 1 | absorption | absorption | n.a | absorption |
| 2 | absorption | absorption | n.a | absorption |
| 3 | absorption * | absorption | n.a | absorption |
| * absorption delayed due to the varnish, 10 x slower than absorption of n-hexadecane ||||

**Claims**

1. Cellulosic banknote (1) comprising a cellulosic banknote substrate (10) having a surface (S1), wherein the cellulosic banknote substrate (10) comprises all security features within the substrate (10) and applied on the surface (S1) of the substrate (10), and an amphiphobic coating (2), wherein the amphiphobic coating (2) comprises an inorganic material (21) selected from the group of ceramic oxides and an organic fluoro material (22) selected from the group consisting of fluoroalkylsilane polymers (FAS), acrylic fluoropolymers, and perfluoropolyalkylether polymers, and is arranged on at least part of a surface (S1) of the cellulosic banknote substrate (10), **characterized in that** the inorganic material (21) is configured as a layer (L1) having a nanostructured surface (S2) on at least part of the surface (S1) of the cellulosic banknote substrate (10), wherein the layer (L1) of inorganic material (21) has a mean thickness of less than 1 μm and wherein the nanostructured surface (S2) of the inorganic material layer (L1) is at least partly coated with the organic fluoro material (22) thereby forming a fluorinated inorganic material layer exhibiting a nanostructured surface (S3) as the amphiphobic coating (2) having

   i. a static water contact angle > 110°, preferably ≥ 120°, preferably ≥ 140° measured at room temperature with a sessile drop method using 1 μl per drop deionized water,
   ii. a static n-hexadecane contact angle ≥ 60°, preferably ≥ 80°, more preferably ≥ 100° measured at room temperature with a sessile drop method using 1 μl per drop n-hexadecane,
   iii. optionally a melted sebum contact angle ≥ 60°, preferably ≥ 80° measured at 50 °C with a sessile drop method using 1 μl per drop synthetic sebum, and
   iv. optionally a surface energy ≤ 20 mJ/m$^2$, preferable ≤ 15 mJ/m$^2$, more preferable ≤ 10 mJ/m$^2$ determined with the Owens, Wendt, Rabel and Kaelble (OWRK) method.

2. Cellulosic banknote (1) according to claim 1, wherein the layer (L1) of inorganic material (21) has a mean thickness in the range of 50 nm to 1 μm, preferably has a mean thickness in the range of 50 nm to 700 nm, more preferably has a mean thickness in the range of 50 nm to 500 nm, even more preferably 200 nm to 400 nm.

3. Cellulosic banknote (1) according to claim 1 or 2, wherein the organic fluoro material (22) is applied to the layer (L1) of the inorganic material (21) as a molecular layer (L2).

4. Cellulosic banknote (1) according to any one of the preceding claims, wherein the inorganic material (21) is selected from the group consisting of $Al_2O_3$, $TiO_2$, $SiO_2$, $Y_2O_3$, ZnO and $ZrO_2$.

5. Cellulosic banknote (1) according to any one of the preceding claims, wherein a printed layer (L3) and/or a foil layer (L4) is arranged between the cellulosic banknote (1) and the layer (L1) of the inorganic material (21), wherein the printed layer (L3) extends over at least part of the surface (S1) of the cellulosic banknote substrate (10) and/or wherein the foil layer (L4) extends over at least part of the surface (S1) of the cellulosic banknote substrate (10).

6. Process for preparing a banknote (1) according to any one of claims 1 to 5, **characterized in that** the process comprises or consists of the following steps:

a. Providing a cellulosic banknote substrate (10) having a surface (S1), wherein the cellulosic banknote substrate (10) comprises all security features within the substrate (10) and applied on the surface of the substrate (10),
b. Providing an inorganic material (21) selected from the group consisting of ceramic oxides,
c. Providing an organic fluoro material (22) selected from the group consisting of fluoroalkylsilane polymers (FAS), acrylic fluoropolymers, and perfluoropolyalkylether polymers,
d. Coating at least part of the surface (S1) of the cellulosic banknote substrate (10) with the inorganic material (21) thereby forming an inorganic material layer (L1) having a mean thickness of less than 1 μm and exhibiting a nanostructured surface (S2) and
e. Coating at least part of the surface (S2) of the inorganic material layer (L1) with the organic fluoro material (22) thereby forming a fluorinated inorganic material layer exhibiting a nanostructured surface (S3) as the amphiphobic coating (2) having

i. a static water contact angle > 110°, preferably $\geq$ 120°, preferably $\geq$ 140° measured at room temperature with a sessile drop method using 1 μl per drop deionized water,
ii. a static n-hexadecane contact angle $\geq$ 60°, preferably $\geq$ 80°, more preferably $\geq$ 100° measured at room temperature with a sessile drop method using 1 μl per drop n-hexadecane,
iii. optionally a melted sebum contact angle $\geq$ 60°, preferably $\geq$ 80° measured at 50 °C with a sessile drop method using 1 μl per drop synthetic sebum, and
iv. optionally a surface energy $\leq$ 20 mJ/m$^2$, preferable $\leq$ 15 mJ/m$^2$, more preferable $\leq$ 10 mJ/m$^2$ determined with the Owens, Wendt, Rabel and Kaelble (OWRK) method.

7. Process for preparing the banknote (1) according to claim 6, wherein the inorganic material (21) in step b) is selected from the group consisting of $Al_2O_3$, $TiO_2$, $SiO_2$, $Y_2O_3$, ZnO and $ZrO_2$.

8. Process for preparing the banknote (1) according to claim 6 or 7, wherein the inorganic material (21) has a mean particle diameter in the range from 1 to 200 nm, more preferably, in the range from 1 to 100 nm, even more preferred in the range from 1 to 80 nm, even more preferred in the range from 30 to 70 nm.

9. Process for preparing the banknote (1) according to any one of claims 6 to 8, wherein the inorganic material (21) in step b) is provided as a sol in a dispersing agent selected from the group of alcohol, water and water containing medium, preferably water.

10. Process for preparing the banknote (1) according to claim 9, wherein the coating step d) is conducted by i) applying the sol of the inorganic material (21) onto at least part of the surface (S1) of the cellulosic banknote substrate (10) thereby arranging the inorganic material (21) in form of a gel film having a nanostructured surface (S2), ii) optionally further nanostructuring the gel film of inorganic material (21) to form the nanostructured surface (S2) of the inorganic material layer (L1) and iii) optionally drying and/or curing the cellulosic material (1) comprising the inorganic material (21) having a nanostructured surface (S2).

11. Process for preparing the banknote (1) according to any one of claims 6 to 10, wherein the coating step e) is conducted by

i. applying the organic fluoro material (22) onto at least part of the surface (S2) of the inorganic material layer (L1) and optionally drying the organic fluoro coated cellulosic material (1), and

ii. curing the organic fluoro material (22) thereby forming the fluorinated nanostructured surface (S3) of the amphiphobic coating (2).

12. Use of a nanostructured amphiphobic coating (2) comprising an inorganic material (21) selected from the group consisting of ceramic oxides and an organic fluoro material (22) selected from the group consisting of fluoroalkylsilane polymers (FAS), acrylic fluoropolymers, and perfluoropolyalkylether polymers exhibiting a

i. a static water contact angle > 110°, preferably $\geq$ 120°, more preferably 140° measured at room temperature with a sessile drop method using 1 $\mu$l per drop deionized water,

ii. a static n-hexadecane contact angle $\geq$ 60°, preferably $\geq$ 80°, more preferably $\geq$ 100° measured at room temperature with a sessile drop method using 1 $\mu$l per drop n-hexadecane,

iii. optionally a melted sebum contact angle $\geq$ 60°, preferably $\geq$ 80° measured at 50 °C with a sessile drop method using 1 $\mu$l per drop synthetic sebum, and

iv. optionally a surface energy $\leq$ 20 mJ/m$^2$, preferable $\leq$ 15 mJ/m$^2$, more preferable $\leq$ 10 mJ/m$^2$ determined with the Owens, Wendt, Rabel and Kaelble (OWRK) method,

for increase of dirt resistance and/or lifetime of a cellulosic banknote (1), **characterized in that** the nanostructured amphiphobic coating (2) is arranged on at least part of a surface (S1) of the cellulosic banknote substrate (10), wherein the cellulosic banknote substrate (10) comprises all security features within the substrate (10) and applied on the surface of the substrate (10), and wherein the inorganic material (21) is configured as a layer (L1) having a mean thickness of less than 1 $\mu$m, which is coated onto at least part of the surface (S1) of the cellulosic banknote substrate (10) thereby forming a nanostructured surface (S2), wherein at least part of the nanostructured surface (S2) of the inorganic material (21) is coated with the organic fluoro material (22) thereby forming a fluorinated inorganic material layer exhibiting a nanostructured surface (S3) as the amphiphobic coating (2).

**Patentansprüche**

1. Cellulosehaltige Banknote (1) umfassend ein cellulosehaltiges Banknotensubstrat (10), das eine Oberfläche (S1) hat, wobei das cellulosehaltige Banknotensubstrat (10) alle Sicherheitsmerkmale innerhalb des Substrats (10) und auf der Oberfläche (S1) des Substrats (10) aufgebracht umfasst, und eine amphiphobe Beschichtung (2), wobei die amphiphobe Beschichtung (2) ein anorganisches Material (21), das aus der Gruppe keramischer Oxide ausgewählt ist, und ein organisches Fluormaterial (22) umfasst, das aus der aus Fluoralkylsilanpolymeren (FAS), Acrylfluorpolymeren und Perfluorpolyalkyletherpolymeren bestehenden Gruppe ausgewählt ist, und auf wenigstens einem Teil einer Oberfläche (S1) des cellulosehaltigen Banknotensubstrats (10) angeordnet ist, **dadurch gekennzeichnet, dass** das anorganische Material (21) als Schicht (L1) ausgebildet ist, die eine nanostrukturierte Oberfläche (S2) auf wenigstens einem Teil der Oberfläche (S1) des cellulosehaltigen Banknotensubstrats (10) aufweist, wobei die Schicht (L1) aus anorganischem Material (21) eine mittlere Dicke von weniger als 1 $\mu$m aufweist und wobei die nanostrukturierte Oberfläche (S2) der Schicht (L1) aus anorganischem Material zumindest teilweise mit dem organischen Fluormaterial (22) beschichtet ist, wodurch eine fluorierte Schicht aus anorganischem Material gebildet ist, die eine nanostrukturierte Oberfläche (S3) als die amphiphobe Beschichtung (2) aufweist, die

i. einen statischen Wasserkontaktwinkel > 110°, vorzugsweise $\geq$ 120°, vorzugsweise $\geq$ 140°, gemessen bei Raumtemperatur mit einem Verfahren des ruhenden Tropfens unter Verwendung von 1 $\mu$l pro Tropfen entionisierten Wassers,

ii. einen statischen n-Hexadecan-Kontaktwinkel $\geq$ 60°, vorzugsweise $\geq$ 80°, bevorzugter $\geq$ 100°, gemessen bei Raumtemperatur mit einem Verfahren des ruhenden Tropfens unter Verwendung von 1 $\mu$l pro Tropfen n-Hexadecan,

iii. optional einen Kontaktwinkel mit geschmolzenem Talg von $\geq$ 60°, vorzugsweise $\geq$ 80°, gemessen bei 50 °C mit einem Verfahren des ruhenden Tropfens unter Verwendung von 1 $\mu$l pro Tropfen synthetischen Talgs, und

iv. optional eine Oberflächenenergie $\leq$ 20 mJ/m$^2$, vorzugsweise $\leq$ 15 mJ/m$^2$, bevorzugter $\leq$ 10 mJ/m$^2$, bestimmt mit dem Verfahren nach Owens, Wendt, Rabel und Kaelble (OWRK-Verfahren), aufweist.

2. Cellulosehaltige Banknote (1) nach Anspruch 1, wobei die Schicht (L1) aus anorganischem Material (21) eine mittlere Dicke im Bereich von 50 nm bis 1 $\mu$m, vorzugsweise eine mittlere Dicke im Bereich von 50 nm bis 700 nm, bevorzugter eine mittlere Dicke im Bereich von 50 nm bis 500 nm, noch bevorzugter von 200 nm bis 400 nm aufweist.

**EP 3 670 740 B1**

3. Cellulosehaltige Banknote (1) nach Anspruch 1 oder 2, wobei das organische Fluormaterial (22) als Molekülschicht (L2) auf die Schicht (L1) aus dem anorganischen Material (21) aufgebracht ist.

4. Cellulosehaltige Banknote (1) nach einem der vorhergehenden Ansprüche, wobei das anorganische Material (21) aus der aus $Al_2O_3$, $TiO_2$, $SiO_2$, $Y_2O_3$, ZnO und $ZrO_2$ bestehenden Gruppe ausgewählt ist.

5. Cellulosehaltige Banknote (1) nach einem der vorhergehenden Ansprüche, wobei zwischen der cellulosehaltigen Banknote (1) und der Schicht (L1) aus dem anorganischen Material (21) eine gedruckte Schicht (L3) und/oder eine Folienschicht (L4) angeordnet ist, wobei sich die gedruckte Schicht (L3) über zumindest einen Teil der Oberfläche (S1) des cellulosehaltigen Banknotensubstrats (10) erstreckt und/oder wobei sich die Folienschicht (L4) über zumindest einen Teil der Oberfläche (S1) des cellulosehaltigen Banknotensubstrats (10) erstreckt.

6. Verfahren zur Herstellung einer Banknote (1) nach einem der Ansprüche 1 bis 5, **dadurch gekennzeichnet, dass** das Verfahren die folgenden Schritte umfasst oder daraus besteht:

   a. Bereitstellen eines cellulosehaltigen Banknotensubstrats (10), das eine Oberfläche (S1) hat, wobei das cellulosehaltige Banknotensubstrat (10) alle Sicherheitsmerkmale innerhalb des Substrats (10) und auf der Oberfläche des Substrats (10) aufgebracht umfasst,
   b. Bereitstellen eines anorganischen Materials (21), das aus der aus keramischen Oxiden bestehenden Gruppe ausgewählt ist,
   c. Bereitstellen eines organischen Fluormaterials (22), das aus der aus Fluoralkylsilanpolymeren (FAS), Acrylfluorpolymeren und Perfluorpolyalkyletherpolymeren bestehenden Gruppe ausgewählt ist,
   d. Beschichten wenigstens eines Teils der Oberfläche (S1) des cellulosehaltigen Banknotensubstrats (10) mit dem anorganischen Material (21), wodurch eine Schicht (L1) aus anorganischem Material gebildet wird, die eine mittlere Dicke von weniger als 1 $\mu$m hat und eine nanostrukturierte Oberfläche (S2) aufweist, und
   e. Beschichten wenigstens eines Teils der Oberfläche (S2) der Schicht (L1) aus anorganischem Material mit dem organischen Fluormaterial (22), wodurch eine fluorierte Schicht aus anorganischem Material gebildet wird, die eine nanostrukturierte Oberfläche (S3) als die amphiphobe Beschichtung (2) aufweist, die

   i. einen statischen Wasserkontaktwinkel > 110°, vorzugsweise $\geq$ 120°, vorzugsweise $\geq$ 140°, gemessen bei Raumtemperatur mit einem Verfahren des ruhenden Tropfens unter Verwendung von 1 $\mu$l pro Tropfen entionisierten Wassers,
   ii. einen statischen n-Hexadecan-Kontaktwinkel $\geq$ 60°, vorzugsweise $\geq$ 80°, bevorzugter $\geq$ 100°, gemessen bei Raumtemperatur mit einem Verfahren des ruhenden Tropfens unter Verwendung von 1 $\mu$l pro Tropfen n-Hexadecan,
   iii. optional einen Kontaktwinkel mit geschmolzenem Talg von $\geq$ 60°, vorzugsweise $\geq$ 80°, gemessen bei 50 °C mit einem Verfahren des ruhenden Tropfens unter Verwendung von 1 $\mu$l pro Tropfen synthetischen Talgs, und
   iv. optional eine Oberflächenenergie $\leq$ 20 mJ/m$^2$, vorzugsweise $\leq$ 15 mJ/m$^2$, bevorzugter $\leq$ 10 mJ/m$^2$, bestimmt mit dem Verfahren nach Owens, Wendt, Rabel und Kaelble (OWRK-Verfahren), aufweist.

7. Verfahren zur Herstellung der Banknote (1) nach Anspruch 6, wobei das anorganische Material (21) in Schritt b) aus der aus $Al_2O_3$, $TiO_2$, $SiO_2$, $Y_2O_3$, ZnO und $ZrO_2$ bestehenden Gruppe ausgewählt ist.

8. Verfahren zur Herstellung der Banknote (1) nach Anspruch 6 oder 7, wobei das anorganische Material (21) einen mittleren Teilchendurchmesser im Bereich von 1 bis 200 nm, bevorzugter im Bereich von 1 bis 100 nm, noch bevorzugter im Bereich von 1 bis 80 nm, noch bevorzugter im Bereich von 30 bis 70 nm aufweist.

9. Verfahren zur Herstellung der Banknote (1) nach einem der Ansprüche 6 bis 8, wobei das anorganische Material (21) in Schritt b) als Sol in einem Dispergiermittel bereitgestellt wird, das aus der Gruppe aus Alkohol, Wasser und wasserhaltigem Medium, vorzugsweise Wasser, ausgewählt ist.

10. Verfahren zur Herstellung der Banknote (1) nach Anspruch 9, wobei der Beschichtungsschritt d) durchgeführt wird durch i) Aufbringen des Sols aus dem anorganischen Material (21) auf zumindest einen Teil der Oberfläche (S1) des cellulosehaltigen Banknotensubstrats (10), wodurch das anorganische Material (21) in Form eines Gelfilms angeordnet wird, der eine nanostrukturierte Oberfläche (S2) aufweist, ii) optional weiteres Nanostrukturieren des Gelfilms aus anorganischem Material (21) zur Bildung der nanostrukturierten Oberfläche (S2) der Schicht (L1) aus anorganischem Material und iii) optional Trocknen und/oder Aushärten des cellulosehaltigen Materials (1), das das anorganische Material (21) umfasst, das eine nanostrukturierte Oberfläche (S2) hat.

11. Verfahren zur Herstellung der Banknote (1) nach einem der Ansprüche 6 bis 10, wobei der Beschichtungsschritt e) durchgeführt wird durch

    i. Aufbringen des organischen Fluormaterials (22) auf wenigstens einen Teil der Oberfläche (S2) der Schicht (L1) aus anorganischem Material und optional Trocknen des mit organischem Fluormaterial beschichteten cellulosehaltigen Materials (1), und

    ii. Aushärten des organischen Fluormaterials (22), wodurch die fluorierte nanostrukturierte Oberfläche (S3) der amphiphoben Beschichtung (2) gebildet wird.

12. Verwendung einer nanostrukturierten amphiphoben Beschichtung (2), umfassend ein anorganisches Material (21), das aus der aus keramischen Oxiden bestehenden Gruppe ausgewählt ist, und ein organisches Fluormaterial (22), das aus der aus Fluoralkylsilanpolymeren (FAS), Acrylfluorpolymeren und Perfluorpolyalkyletherpolymeren bestehenden Gruppe ausgewählt ist, die

    i. einen statischen Wasserkontaktwinkel > 110°, vorzugsweise $\geq$ 120°, bevorzugter $\geq$ 140°, gemessen bei Raumtemperatur mit einem Verfahren des ruhenden Tropfens unter Verwendung von 1 $\mu$l pro Tropfen entionisierten Wassers,

    ii. einen statischen n-Hexadecan-Kontaktwinkel $\geq$ 60°, vorzugsweise $\geq$ 80°, bevorzugter $\geq$ 100°, gemessen bei Raumtemperatur mit einem Verfahren des ruhenden Tropfens unter Verwendung von 1 $\mu$l pro Tropfen n-Hexadecan,

    iii. optional einen Kontaktwinkel mit geschmolzenem Talg von $\geq$ 60°, vorzugsweise $\geq$ 80°, gemessen bei 50 °C mit einem Verfahren des ruhenden Tropfens unter Verwendung von 1 $\mu$l pro Tropfen synthetischen Talgs, und

    iv. optional eine Oberflächenenergie $\leq$ 20 mJ/m$^2$, vorzugsweise $\leq$ 15 mJ/m$^2$, bevorzugter $\leq$ 10 mJ/m$^2$, bestimmt mit dem Verfahren nach Owens, Wendt, Rabel und Kaelble (OWRK-Verfahren), aufweist, zur Erhöhung der Schmutzbeständigkeit und/oder der Lebensdauer einer cellulosehaltigen Banknote (1), **dadurch gekennzeichnet, dass** die nanostrukturierte amphiphobe Beschichtung (2) auf wenigstens einem Teil einer Oberfläche (S1) des cellulosehaltigen Banknotensubstrats (10) angeordnet ist, wobei das cellulosehaltige Banknotensubstrat (10) alle Sicherheitsmerkmale innerhalb des Substrats (10) und auf der Oberfläche des Substrats (10) aufgebracht umfasst, und wobei das anorganische Material (21) als Schicht (L1) ausgebildet ist, die eine mittlere Dicke von weniger als 1 $\mu$m aufweist und auf wenigstens einen Teil der Oberfläche (S1) des cellulosehaltigen Banknotensubstrats (10) aufgebracht ist, wodurch eine nanostrukturierte Oberfläche (S2) gebildet ist, wobei wenigstens ein Teil der nanostrukturierten Oberfläche (S2) aus dem anorganischen Material (21) mit dem organischen Fluormaterial (22) beschichtet ist, wodurch eine fluorierte Schicht aus anorganischem Material gebildet ist, die eine nanostrukturierte Oberfläche (S3) als die amphiphobe Beschichtung (2) aufweist.

## Revendications

1. Billet de banque cellulosique (1) comprenant un substrat de billet de banque cellulosique (10) qui présente une surface (S1), le substrat de billet de banque cellulosique (10) comprenant toutes les caractéristiques de sécurité dans le substrat (10) et appliquées sur la surface (S1) du substrat (10), et un revêtement amphiphobe (2), le revêtement amphiphobe (2) comprenant un matériau inorganique (21) choisi dans le groupe des oxydes céramiques, et un matériau fluoré organique (22) choisi dans le groupe constitué de polymères de fluoroalkylsilane (FAS), de fluoropolymères acryliques et de polymères de perfluoropolyalkyléther, et étant disposé sur au moins une partie d'une surface (S1) du substrat de billet de banque cellulosique (10), **caractérisé en ce que** le matériau inorganique (21) est réalisé sous forme de couche (L1) qui présente une surface nanostructurée (S2) sur au moins une partie de la surface (S1) du substrat de billet de banque cellulosique (10), la couche (L1) de matériau inorganique (21) présentant une épaisseur moyenne inférieure à 1 $\mu$m, et la surface nanostructurée (S2) de la couche (L1) de matériau inorganique étant au moins partiellement revêtue du matériau fluoré organique (22), formant ainsi une couche fluorée de matériau inorganique présentant une surface nanostructurée (S3) en tant que revêtement amphiphobe (2), présentant

    i. un angle de contact statique avec l'eau > 110°, de préférence $\geq$ 120°, de manière plus préférée $\geq$ 140°, mesuré à température ambiante par une méthode de la goutte sessile en utilisant 1 $\mu$l d'eau désionisée par goutte,

    ii. un angle de contact statique avec du n-hexadécane $\geq$ 60°, de préférence $\geq$ 80°, de manière plus préférée $\geq$ 100°, mesuré à température ambiante par une méthode de la goutte sessile en utilisant 1 $\mu$l de n-hexadécane

par goutte,

    iii. facultativement un angle de contact avec du sébum fondu $\geq 60°$, de préférence $\geq 80°$, mesuré à 50 °C par une méthode de la goutte sessile en utilisant 1 $\mu$l de sébum synthétique par goutte, et

    iv. facultativement une énergie de surface $\leq 20$ mJ/m$^2$, de préférence $\leq 15$ mJ/m$^2$, de manière plus préférée $\leq 10$ mJ/m$^2$, déterminée par la méthode de Owens, Wendt, Rabel et Kaelble (méthode OWRK).

**2.** Billet de banque cellulosique (1) selon la revendication 1, dans lequel la couche (L1) de matériau inorganique (21) présente une épaisseur moyenne comprise dans la plage de 50 nm à 1 $\mu$m, de préférence une épaisseur moyenne comprise dans la plage de 50 nm à 700 nm, de manière plus préférée une épaisseur moyenne comprise dans la plage de 50 nm à 500 nm, de manière encore plus préférée de 200 nm à 400 nm.

**3.** Billet de banque cellulosique (1) selon la revendication 1 ou 2, dans lequel le matériau fluoré organique (22) est appliqué sous forme de couche moléculaire (L2) sur la couche (L1) de matériau inorganique (21).

**4.** Billet de banque cellulosique (1) selon l'une des revendications précédentes, dans lequel le matériau inorganique (21) est choisi dans le groupe constitué de Al$_2$O$_3$, TiO$_2$, SiO$_2$, Y$_2$O$_3$, ZnO et ZrO$_2$.

**5.** Billet de banque cellulosique (1) selon l'une des revendications précédentes, dans lequel une couche imprimée (L3) et/ou une couche en feuille (L4) est disposée entre le billet de banque cellulosique (1) et la couche (L1) de matériau inorganique (21), la couche imprimée (L3) s'étendant sur au moins une partie de la surface (S1) du substrat de billet de banque cellulosique (10), et/ou la couche en feuille (L4) s'étendant sur au moins une partie de la surface (S1) du substrat de billet de banque cellulosique (10).

**6.** Procédé de fabrication d'un billet de banque (1) selon l'une des revendications 1 à 5, **caractérisé en ce que** le procédé comprend ou consiste en les étapes suivantes :

    a. fournir un substrat de billet de banque cellulosique (10) qui présente une surface (S1), le substrat de billet de banque cellulosique (10) comprenant toutes les caractéristiques de sécurité dans le substrat (10) et appliquées sur la surface du substrat (10),

    b. fournir un matériau inorganique (21) choisi dans le groupe constitué des oxydes céramiques,

    c. fournir un matériau fluoré organique (22) choisi dans le groupe constitué de polymères de fluoroalkylsilane (FAS), de fluoropolymères acryliques et de polymères de perfluoropolyalkyléther,

    d. revêtir au moins une partie de la surface (S1) du substrat de billet de banque cellulosique (10) du matériau inorganique (21) formant ainsi une couche (L1) de matériau inorganique qui présente une épaisseur moyenne inférieure à 1 $\mu$m, et présentant une surface nanostructurée (S2), et

    e. revêtir au moins une partie de la surface (S2) de la couche (L1) de matériau inorganique du matériau fluoré organique (22), formant ainsi une couche fluorée de matériau inorganique présentant une surface nanostructurée (S3) en tant que revêtement amphiphobe (2), présentant

        i. un angle de contact statique avec l'eau > 110°, de préférence $\geq 120°$, de manière plus préférée $\geq 140°$, mesuré à température ambiante par une méthode de la goutte sessile en utilisant 1 $\mu$l d'eau désionisée par goutte,

        ii. un angle de contact statique avec du n-hexadécane $\geq 60°$, de préférence $\geq 80°$, de manière plus préférée $\geq 100°$, mesuré à température ambiante par une méthode de la goutte sessile en utilisant 1 $\mu$l de n-hexadécane par goutte,

        iii. facultativement un angle de contact avec du sébum fondu $\geq 60°$, de préférence de $\geq 80°$, mesuré à 50 °C par une méthode de la goutte sessile en utilisant 1 $\mu$l de sébum synthétique par goutte, et

        iv. facultativement une énergie de surface $\leq 20$ mJ/m$^2$, de préférence $\leq 15$ mJ/m$^2$, de manière plus préférée $\leq 10$ mJ/m$^2$, déterminée par la méthode de Owens, Wendt, Rabel et Kaelble (méthode OWRK).

**7.** Procédé de fabrication du billet de banque (1) selon la revendication 6, dans lequel le matériau inorganique (21) de l'étape b) est choisi dans le groupe constitué de Al$_2$O$_3$, TiO$_2$, SiO$_2$, Y$_2$O$_3$, ZnO et ZrO$_2$.

**8.** Procédé de fabrication du billet de banque (1) selon la revendication 6 ou 7, dans lequel le matériau inorganique (21) présente un diamètre de particule moyen dans la plage de 1 à 200 nm, de préférence dans la plage de 1 à 100 nm, de manière plus préférée dans la plage de 1 à 80 nm, de manière encore plus préférée dans la plage de 30 à 70 nm.

**9.** Procédé de fabrication du billet de banque (1) selon l'une des revendications 6 à 8, dans lequel le matériau inorganique (21) de l'étape b) est fourni sous forme de sol dans un agent dispersant choisi dans le groupe constitué d'alcool, d'eau et d'un milieu contenant de l'eau, de préférence d'eau.

10. Procédé de fabrication du billet de banque (1) selon la revendication 9, dans lequel l'étape de revêtement d) est réalisée i) en appliquant le sol du matériau inorganique (21) sur au moins une partie de la surface (S1) du substrat de billet de banque cellulosique (10), le matériau inorganique (21) étant ainsi disposé sous forme de film de gel présentant une surface nanostructurée (S2), ii) facultativement en nanostructurant en outre le film de gel de matériau inorganique (21) pour former la surface nanostructurée (S2) de la couche (L1) de matériau inorganique, et iii) facultativement en séchant et/ou en durcissant le matériau cellulosique (1) comprenant le matériau inorganique (21) qui présente une surface nanostructurée (S2).

11. Procédé de fabrication du billet de banque (1) selon l'une des revendications 6 à 10, dans lequel l'étape de revêtement e) est réalisée

    i. en appliquant du matériau fluoré organique (22) sur au moins une partie de la surface (S2) de la couche (L1) de matériau inorganique et, facultativement, en séchant le matériau fluoré organique cellulosique (1) revêtu, et
    ii. en durcissant le matériau fluoré organique (22), formant ainsi la surface nanostructurée fluorée (S3) du revêtement amphiphobe (2).

12. Utilisation d'un revêtement amphiphobe nanostructuré (2) comprenant un matériau inorganique (21) choisi dans le groupe constitué d'oxydes céramiques, et un matériau fluoré organique (22) choisi dans le groupe constitué de polymères de fluoroalkylsilane (FAS), de fluoropolymères acryliques et de polymères de perfluoropolyalkyléther, présentant

    i. un angle de contact statique avec l'eau > 110°, de préférence $\geq$ 120°, de manière plus préférée $\geq$ 140°, mesuré à température ambiante par une méthode de la goutte sessile en utilisant 1 $\mu$l d'eau désionisée par goutte,
    ii. un angle de contact statique avec du n-hexadécane $\geq$ 60°, de préférence $\geq$ 80°, de manière plus préférée $\geq$ 100°, mesuré à température ambiante par une méthode de la goutte sessile en utilisant 1 $\mu$l de n-hexadécane par goutte,
    iii. facultativement un angle de contact avec du sébum fondu $\geq$ 60°, de préférence $\geq$ 80°, mesuré à 50 °C par une méthode de la goutte sessile en utilisant 1 $\mu$l de sébum synthétique par goutte, et
    iv. facultativement une énergie de surface $\leq$ 20 mJ/m$^2$, de préférence $\leq$ 15 mJ/m$^2$, de manière plus préférée $\leq$ 10 mJ/m$^2$, déterminée par la méthode de Owens, Wendt, Rabel et Kaelble (méthode OWRK),

pour augmenter la résistance aux salissures et/ou la durée de vie d'un billet de banque cellulosique (1), **caractérisé en ce que** le revêtement amphiphobe nanostructuré (2) est disposé sur au moins une partie d'une surface (S1) du substrat de billet de banque cellulosique (10), le substrat de billet de banque cellulosique (10) comprenant toutes les caractéristiques de sécurité dans le substrat (10) et appliquées sur la surface du substrat (10), et le matériau inorganique (21) étant réalisé sous forme de couche (L1) qui présente une épaisseur moyenne inférieure à 1 $\mu$m qui est appliquée sur au moins une partie de la surface (S1) du substrat de billet de banque cellulosique (10), formant ainsi une surface nanostructurée (S2), au moins une partie de la surface nanostructurée (S2) du matériau inorganique (21) étant revêtue du matériau fluoré organique (22), formant ainsi une couche de matériau inorganique fluorée qui présente une surface nanostructurée (S3) en tant que revêtement amphiphobe (2).

FIG. 1)

FIG. 2)

EP 3 670 740 B1

FIG. 3A

FIG. 3B

FIG. 3C

**EP 3 670 740 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2681347 B1
- EP 2864522 B1